# EUROPEAN PATENT APPLICATION

(11) **EP 4 746 389 A1**
(43) Date of publication of application: **20.05.2026**
(21) Application number: 24867148.9
(22) Date of filing: 09.08.2024
(51) Int. Cl.: H04M 1/02

(54) **ROTATING SHAFT ASSEMBLY AND FOLDABLE ELECTRONIC DEVICE**

(30) Priority: 20.09.2023 CN 202311223572
(71) Applicant: Honor Device Co., Ltd., Shenzhen, Guangdong 518040 (CN)
(72) Inventor: LIU, Xiaodong, Shenzhen, Guangdong 518040 (CN); DONG, Shaohong, Shenzhen, Guangdong 518040 (CN); CHEN, Ruihao, Shenzhen, Guangdong 518040 (CN); HUANG, Shengxian, Shenzhen, Guangdong 518040 (CN); DAN, Jinqi, Shenzhen, Guangdong 518040 (CN); JIANG, Tianli, Shenzhen, Guangdong 518040 (CN); HUANG, Jian, Shenzhen, Guangdong 518040 (CN); JIN, Kaifang, Shenzhen, Guangdong 518040 (CN); MENG, Gang, Shenzhen, Guangdong 518040 (CN); PENG, Gaofeng, Shenzhen, Guangdong 518040 (CN)
(74) Representative: Isarpatent
(86) International application number: PCT/CN2024/111001
(87) International publication number: WO 2025/060731

(57) **Abstract**

This application provides a rotating shaft assembly and a foldable electronic device. The rotating shaft assembly is applied to a foldable electronic device, and the rotating shaft assembly includes: an integrally formed rotating shaft support, where the rotating shaft support extends from a first end of the foldable device to a second end of the foldable device in a first direction, and a middle portion of the rotating shaft support includes a first segment used for a flexible printed circuit to pass through; and at least four groups of main swing arms, where each group of main swing arms includes two main swing arms symmetrically disposed on two sides of the rotating shaft support, each main swing arm is rotatably connected to the rotating shaft support, and four groups of main swing arms in the at least four groups of main swing arms are respectively disposed on a first end and a second end of the rotating shaft support and two sides of the first segment. According to the rotating shaft assembly in this application, reliability of overall strength can be ensured while overall slimness and lightness are ensured.

## Description

This application claims priority to Chinese Patent Application No. 202311223572.1, filed with the China National Intellectual Property Administration on September 20, 2023 and entitled "ROTATING SHAFT ASSEMBLY AND FOLDABLE ELECTRONIC DEVICE", which is incorporated herein by reference in its entirety.

### TECHNICAL FIELD

This application relates to the field of electronic devices, and in particular, to a rotating shaft assembly and a foldable electronic device.

### BACKGROUND

A foldable electronic device (for example, a foldable-screen mobile phone) can switch between an unfolded state and a folded state, and has both portability and a large-screen display effect, and is increasingly popular in the market. The foldable electronic device is folded and unfolded by using a rotating shaft assembly, and the rotating shaft assembly may include structures such as a rotating shaft support, a main swing arm, and a damping assembly that provides a damping function.

As the foldable electronic device becomes increasingly slim and light, the rotating shaft assembly also needs to be increasingly slim and light. However, how to make the rotating shaft assembly slim and light while ensuring reliability of the rotating shaft assembly is a difficulty that currently needs to be overcome.

### SUMMARY

In view of this, this application provides a rotating shaft assembly, to resolve a problem that strength reliability cannot be met when a current rotating shaft assembly is slim and light.

Some implementations of this application provide a rotating shaft assembly. The following describes this application from a plurality of aspects. For implementations and beneficial effects of the plurality of aspects, reference may be made to each other.

According to a first aspect, this application provides a rotating shaft assembly, applied to a foldable electronic device. The rotating shaft assembly includes:
an integrally formed rotating shaft support, where the rotating shaft support extends from a first end of the foldable device to a second end of the foldable device in a first direction, and a middle portion of the rotating shaft support includes a first segment used for a flexible printed circuit to pass through; and at least four groups of main swing arms, where each group of main swing arms includes two main swing arms symmetrically disposed on two sides of the rotating shaft support, each main swing arm is rotatably connected to the rotating shaft support, and four groups of main swing arms in the at least four groups of main swing arms are respectively disposed on a first end and a second end of the rotating shaft support and two sides of the first segment.

According to the rotating shaft assembly in this embodiment of this application, the integrally formed rotating shaft support is used, and the main swing arms are connected to the two ends of the rotating shaft support and two ends on which the flexible printed circuit is laid, so that overall strength of the rotating shaft assembly can be improved.

In an embodiment of the first aspect, the rotating shaft support includes:
a support body, where the support body is an elongated strip extending in the first direction, and a length of the support body in the first direction is a length of the rotating shaft support in the first direction; and
a supporting portion, where the supporting portion is symmetrically disposed on the support body by using the support body as an axis, a sliding groove is disposed at an installation position that is of the supporting portion and that corresponds to the main swing arm, and a first arc-shaped sliding surface of the sliding groove fits with a second arc-shaped sliding surface of the main swing arm, where
the installation position of the supporting portion is configured as three segments that are spaced apart, the three segments are a left segment, an intermediate segment, and a right segment, and the sliding groove is disposed on each of the left segment, the intermediate segment, and the right segment.

Integrally formed distributed sliding grooves are used, so that manufacturing tolerance sizes of a plurality of parts can be reduced, thereby improving installation precision of the main swing arm and the rotating shaft support. In addition, because a single part is installed, installation time can be reduced, and production efficiency can be improved.

In an embodiment of the first aspect, sliding grooves on the left segment and the right segment are disposed on a lower surface of the supporting portion, a sliding groove on the intermediate segment is disposed on an upper surface of the supporting portion, and the sliding grooves on the left segment, the intermediate segment, and the right segment are coaxial, so that it is ensured that the main swing arm can rotate along an axis after fitting with the sliding groove.

In an embodiment of the first aspect, sliding grooves on the left segment and the right segment are disposed on an upper surface of the supporting portion, a sliding groove on the intermediate segment is disposed on a lower surface of the supporting portion, and the sliding grooves on the left segment, the intermediate segment, and the right segment are coaxial. As another embodiment, this structure ensures that the main swing arm can rotate along an axis after fitting with the sliding groove.

In an embodiment of the first aspect, the rotating shaft assembly further includes a plurality of damping assemblies, where the plurality of damping assemblies are disposed on a segment of the rotating shaft support other than the first segment. The damping assembly includes: a spring mechanism, where the spring mechanism is installed on the rotating shaft support, and a first rotating shaft of the spring mechanism is disposed in the first direction; a gear mechanism, where the gear mechanism is installed on the rotating shaft support, a second rotating shaft of the gear mechanism is disposed in the first direction, and the first rotating shaft and the second rotating shaft are rotating shafts having different axes; and two auxiliary swing arms, where the two auxiliary swing arms are symmetrically disposed by using the rotating shaft support as an axis, and are rotatably connected to the rotating shaft support, a first side edge of the auxiliary swing arm meshes with a gear of the gear mechanism, another side edge of the auxiliary swing arm abuts against the spring mechanism by using structures of a cam and a cam follower, and when rotating, the auxiliary swing arm pushes a compression force of a spring of the spring mechanism to increase to decrease. A friction force on contact surfaces of the cam and the cam follower can be adjusted through relative rotation between the cam and the cam follower, so that different rotational hand feel experience brought by a housing to a user during rotation can be adjusted, thereby improving user experience.

In an embodiment of the first aspect, a convex-concave wheel is disposed on a side of the auxiliary swing arm; a concave-convex wheel corresponding to the convex-concave wheel is disposed on a side of the spring mechanism, and the convex-concave wheel and the concave-convex wheel rotate around the first rotating shaft; and when the convex-concave wheel and the concave-convex wheel rotate around the first rotating shaft to a meshed state, a protruding portion of the convex-concave wheel corresponds to a recessed portion of the concave-convex wheel, and a recessed portion of the convex-concave wheel corresponds to a protruding portion of the concave-convex wheel. A convex structure and a concave structure fit with each other to change the compression force of the spring when the auxiliary swing arm rotates, so as to provide a damping force for rotation of the auxiliary swing arm, so that a damping function is provided for a rotation function of the entire rotating shaft assembly, thereby improving a hand feel of the user when the user rotates a foldable-screen mobile phone.

In an embodiment of the first aspect, a first gear is disposed on the auxiliary swing arm, the gear mechanism includes a second gear, the first gear meshes with the second gear, and the auxiliary swing arms on the two sides of the rotating shaft support are driven to rotate synchronously by using the first gear and the second gear. This structure is simple and can display synchronous rotation of two auxiliary swing arms.

In an embodiment of the first aspect, at least two second gears exist, and the at least two second gears mesh with each other.

In an embodiment of the first aspect, the rotating shaft assembly further includes a connecting member, where the connecting member is rotatably connected to at least two main swing arms and at least one auxiliary swing arm. As a bridge for connecting two main swing arms, the connecting member can improve a coaxial rotation capability between the main swing arms. In addition, a connection of two main swing arms can improve a drop resistance capability of the connecting member compared with a connection form of a single main swing arm.

In an embodiment of the first aspect, two main swing arms rotatably connected to the connecting member are respectively located on two ends of the connecting member, so that drop resistance performance of the connecting member can be further improved.

In an embodiment of the first aspect, the rotating shaft assembly further includes a door panel, where the door panel is laid on the main swing arm, the auxiliary swing arm, and the connecting member, and is separately connected to the main swing arm, the auxiliary swing arm, and the connecting member. Overall linkage of the rotating shaft assembly can be improved, and a display screen can be supported, so that overall strength of a product is improved. The door panel includes: a door panel body, where the door panel body is rotatably connected to the connecting member; and a sliding groove member, where the sliding groove member is disposed on the door panel, an arc-shaped surface is formed on a surface of the sliding groove member, to assist the door panel body in rotating relative to the connecting member along a trajectory of the arc-shaped surface, and the door panel body and the sliding groove member are integrally formed. Overall strength and kinematic pair strength of the door panel can be ensured, and machining feasibility and machining accuracy of the product can be met, which helps slim the entire product, and can ensure overall strength of the product.

In an embodiment of the first aspect, a first lap surface is disposed on a side that is of the door panel and that is opposite to the auxiliary swing arm; a second lap surface is disposed on a side that is of the auxiliary swing arm and that is opposite to the door panel; and when the auxiliary swing arm drives the door panel to be in a folded state, and the door panel moves toward the auxiliary swing arm, the first lap surface abuts against the second lap surface, and when the door panel returns to a position before the movement, a gap is formed between the first lap surface and the second lap surface. Therefore, a drop resistance capability at the auxiliary swing arm during an accidental drop is improved without affecting normal use.

In an embodiment of the first aspect, a plurality of first lap surfaces are disposed, a plurality of second lap surfaces are disposed, and the plurality of first lap surfaces are in a one-to-one correspondence with the plurality of second lap surfaces, so that the drop resistance capability at the auxiliary swing arm can be further improved.

In an embodiment of the first aspect, an unfolding stopping block is disposed on each of two sides of an end that is of the intermediate segment and that is close to the support body, and the unfolding stopping block abuts against a first abutment surface of the main swing arm when the main swing arm is in an unfolded state, to limit an unfolding angle of the main swing arm. When the main swing arm is in the unfolded state, an abutment surface of the unfolding stopping block abuts against the first abutment surface of the main swing arm, so that the unfolding angle of the main swing arm can be limited, and the unfolding angle is prevented from being excessively large to affect flatness of two display screens of the foldable-screen mobile phone after the two display screens are unfolded.

In an embodiment of the first aspect, a folding stopping block is disposed on each of a side of the left segment and a side of the right segment that are opposite to each other, and the folding stopping block abuts against a second abutment surface of the main swing arm when the main swing arm is in a folded state, to limit a folding angle of the main swing arm, so that the folding angle is prevented from being excessively large to damage the display screen, and the like.

In an embodiment of the first aspect, an arc-shaped sliding groove is disposed at a position that is of the auxiliary swing arm and that overlaps the connecting member, an end portion of the connecting member abuts against a sidewall of the arc-shaped sliding groove when the auxiliary swing arm is in a folded state, and the end portion of the connecting member slides along an arc-shaped surface of the arc-shaped sliding groove when the auxiliary swing arm drives the connecting member to rotate. Compared with a conventional linear shape, this structure helps improve a thickness of the auxiliary swing arm and improve strength of the auxiliary swing arm, which helps expand available space for display screen installation and can improve a drop resistance capability of the entire shaft.

In an embodiment of the first aspect, six groups of main swing arms are disposed. Increasing a quantity of main swing arms can improve overall strength of the rotating shaft assembly.

In an embodiment of the first aspect, four groups of damping assemblies are disposed, so that overall strength of the rotating shaft assembly can be improved, and in addition, the damping assembly fits with the main swing arm to improve a hand feel during device opening/closing.

According to a second aspect, a foldable electronic device includes a first housing, a second housing, and a rotating shaft assembly. The first housing and the second housing are rotatably connected to each other by using the rotating shaft assembly, and the rotating shaft assembly is the rotating shaft assembly explained in the foregoing embodiment of the first aspect.

### BRIEF DESCRIPTION OF DRAWINGS

FIG. 1 is a schematic diagram of a foldable-screen mobile phone in an unfolded state, an intermediate state, and a folded state according to an embodiment of this application;
FIG. 2 is a top view of a rotating shaft assembly in an unfolded state according to an embodiment of this application;
FIG. 3 is a bottom view of a rotating shaft assembly in an unfolded state according to an embodiment of this application;
FIG. 4 is a top view of a rotating shaft support according to an embodiment of this application;
FIG. 5 is a schematic diagram of a partial structure of a rotating shaft support according to an embodiment of this application;
FIG. 6 is a schematic diagram of a three-dimensional structure of a main swing arm according to an embodiment of this application;
FIG. 7 is a schematic diagram of a structure of a damping assembly according to an embodiment of this application;
FIG. 8 is an exploded view of a damping assembly according to an embodiment of this application;
FIG. 9 is a schematic diagram of a structure of a door panel according to an embodiment of this application;
FIG. 10 is a schematic diagram of a partial structure of a rotating shaft assembly in a folded state according to an embodiment of this application;
FIG. 11 is a diagram of a cross-sectional structure in an A-A direction in FIG. 10;
FIG. 12 is a schematic diagram of a partial structure of a rotating shaft assembly in an unfolded state according to an embodiment of this application;
FIG. 13 is a diagram of a cross-sectional structure in a B-B direction in FIG. 12;
FIG. 14 is a schematic diagram of a structure of a main swing arm from another angle according to an embodiment of this application;
FIG. 15 is a schematic diagram of a structure of a rotating shaft assembly in a folded state from another angle according to an embodiment of this application;
FIG. 16 is a diagram of a cross-sectional structure in a C-C direction in FIG. 15;
FIG. 17 is a schematic diagram of a partial structure of a rotating shaft assembly in a folded state from still another angle according to an embodiment of this application; and
FIG. 18 is a diagram of a cross-sectional structure in a D-D direction in FIG. 17.

### Reference numerals:

foldable-screen mobile phone 1000;
first housing 100; first screen 110; opening 111;
second housing 200; second screen 210;
rotating shaft assembly 300;
rotating shaft support 310; first segment 311; second segment 312; first end 313; second end 314; support body 315; supporting portion 316; installation position 317; left segment a; intermediate segment b; right segment c; first sliding groove a1; second sliding groove c1; third sliding groove b1; first arc-shaped sliding surface a11; unfolding stopping block e; folding stopping block f;
main swing arm 320; fourth sliding groove 321; fifth sliding groove 322; sixth sliding groove 323; second arc-shaped sliding surface 324; first abutment surface 325; second abutment surface 326;
damping assembly 330;
spring mechanism 331; first rotating shaft 331a; concave-convex wheel 331b; recessed portion 331b1; spring 331c; first fastening base 331d; second fastening base 331e;
gear mechanism 332; second gear 332a; third fastening base 332b; fourth fastening base 332c; second rotating shaft 332d;
auxiliary swing arm 333; first gear 333a; convex-concave wheel 333b; protruding portion 333b1; second lap surface 3331; arc-shaped sliding groove 3332;
connecting member 334;
door panel 335; door panel body 3351; first sliding groove member 3352; second sliding groove member 3353; first lap surface 3354.

### DESCRIPTION OF EMBODIMENTS

The following clearly and completely describes the technical solutions in the embodiments of this application with reference to the accompanying drawings in the embodiments of this application.

The following describes in detail a foldable electronic device in the embodiments of this application with reference to the accompanying drawings.

In the embodiments of this application, the foldable electronic device may be but is not limited to a foldable-screen mobile phone, and may alternatively be an electronic device that needs to be open/closed, for example, a tablet personal computer (tablet personal computer), an e-book reader, a laptop computer (laptop computer), a personal digital assistant (personal digital assistant, PDA), a personal computer, a notebook (notebook), a vehicle-mounted device, or a wearable device (for example, a watch). In the following embodiments, a foldable-screen mobile phone is used as an example to describe a structure of the foldable electronic device.

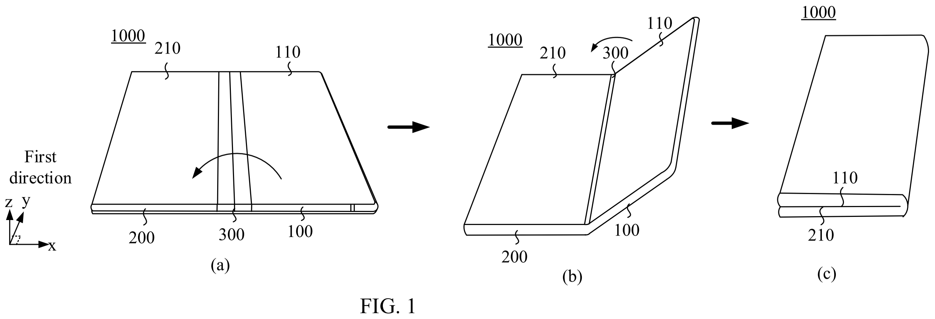

Referring to FIG. 1, FIG. 1 is a schematic diagram of a process in which a foldable-screen mobile phone changes from an unfolded state to a folded state according to an embodiment of this application. (a) in FIG. 1 is a schematic diagram of a structure of the foldable-screen mobile phone in a fully unfolded state according to an embodiment of this application, (b) in FIG. 1 is a schematic diagram of a structure of the foldable-screen mobile phone switching from the unfolded state to the folded state according to an embodiment of this application, and (c) in FIG. 1 is a schematic diagram of a structure of the foldable-screen mobile phone in the folded state according to an embodiment of this application.

As shown in FIG. 1, the foldable-screen mobile phone 1000 includes a first housing 100, a second housing 200, and a rotating shaft assembly 300 (namely, a hinge apparatus). The first housing 100 and the second housing 200 are rotatably connected to each other by using the rotating shaft assembly 300. In different use states, a user may use the first housing 100 and the second housing 200 to rotate around the rotating shaft assembly 300, to implement different use states of the unfolded state and the folded state of the foldable-screen mobile phone 1000. As shown in (a) in FIG. 1, when a rotation angle of the first housing 100 around the rotating shaft assembly 300 is 0, the foldable-screen mobile phone 1000 is in the fully unfolded use state (which may be understood as the unfolded state). As shown in (b) in FIG. 1, the first housing 100 rotates around the rotating shaft assembly 300 toward the second housing 200. When the rotation angle is 180°, the foldable-screen mobile phone 1000 shown in (c) in FIG. 1 in a fully closed state (which may be understood as the folded state) is obtained.

It should be noted that the angles exemplified in this application are allowed to have slight deviations. For example, when the foldable-screen mobile phone 1000 is in an open state, an angle at which the foldable-screen mobile phone 1000 is opened may be 180°, or may be approximately 180°, for example, 170°, 175°, 185°, or 190° that differs from 180 degrees by a specific angle range or lower, and a corresponding rotation angle may be understood as 170°, 175°, 185°, 190°, or the like. Angles exemplified later may be understood in the same way.

A person skilled in the art may understand that a specific structure of the foldable-screen mobile phone 1000 is not limited in this application. For example, the foldable-screen mobile phone 1000 may further include various electronic components, and the electronic components and the first housing 100, the second housing 200, and the rotating shaft assembly 300 jointly constitute the foldable-screen mobile phone 1000. The first housing 100, the second housing 200, and the rotating shaft assembly 300 provide protection and support for structures such as various electronic components. To facilitate understanding of a folding process and a use scenario of the foldable-screen mobile phone 1000, the following describes, by using an example, a structure possibly used for the foldable-screen mobile phone. In addition, in this embodiment of this application, the foldable-screen mobile phone may be an inward-foldable-screen mobile phone. To be specific, a display screen is housed between the two housings in the folded state of the foldable-screen mobile phone.

As shown in FIG. 1, in an implementation, the foldable-screen mobile phone 1000 further includes the display screen, and the display screen is laid on a side of a housing assembly including the first housing 100, the second housing 200, and the rotating shaft assembly 300. A part of the display screen installed on the first housing 100 may be referred to as a first screen 110, and a part of the display screen installed on the second housing 200 may be referred to as a second screen 210. The first screen 110 and the second screen 210 may be an entire screen. As shown in (b) in FIG. 1, driven by the rotating shaft assembly 300, the first screen 110 rotates with the first housing 100 around the rotating shaft assembly 300, to implement the unfolded state or the folded state with the second screen 210 on the second housing 200. In this embodiment of this application, the display screen may be but is not limited to an organic light-emitting diode (organic light-emitting diode, OLED) display screen, an active-matrix organic light-emitting diode (active-matrix organic light-emitting diode, AMOLED) display screen, a quantum dot light emitting diode (quantum dot light emitting diodes, QLED) display screen, or the like. This is not limited in this application.

In an implementation, both the first housing 100 and the second housing 200 have accommodating space inside to accommodate some electronic components. The electronic components include but are not limited to a circuit board, a battery, a camera module, a microphone, a speaker, and the like. This is not limited in this application.

In the following embodiments, the rotating shaft assembly 300 in this embodiment of this application is described with reference to the accompanying drawings.

In the figures of this specification, an x direction is a length direction of the foldable-screen mobile phone and each component (for example, a display screen) of the foldable-screen mobile phone after the foldable-screen mobile phone is unfolded, a y direction is a width direction of the foldable-screen mobile phone and each component of the foldable-screen mobile phone after the foldable-screen mobile phone is unfolded, and a z direction is a thickness direction of the foldable-screen mobile phone and each component of the foldable-screen mobile phone. A first direction mentioned in the embodiments of this application may be a y-axis direction, and a second direction may be a z-axis direction.

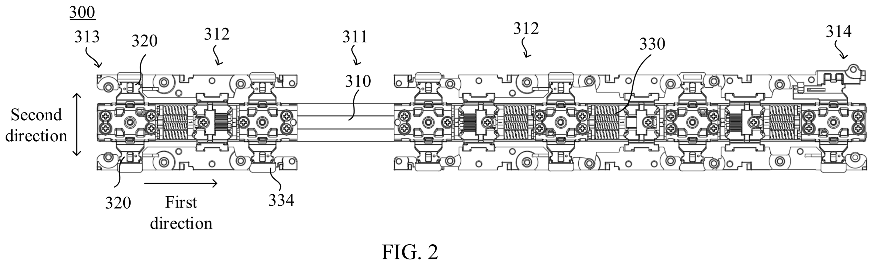

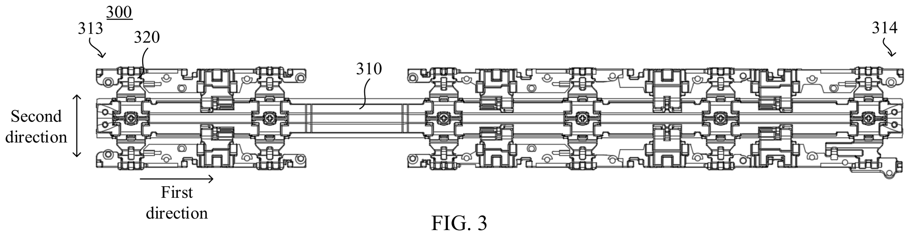

Referring to FIG. 2 and FIG. 3, FIG. 2 is a top view of a rotating shaft assembly in an unfolded state according to an embodiment of this application, and FIG. 3 is a bottom view of a rotating shaft assembly in an unfolded state according to an embodiment of this application.

As shown in FIG. 2 and FIG. 3, the rotating shaft assembly 300 includes a rotating shaft support 310 and six groups of main swing arms 320. The six groups of main swing arms are configured to drive two middle frames (for example, the first housing 100 and the second housing 200 in FIG. 1) of the foldable-screen mobile phone to rotate around the rotating shaft support 310. The rotating shaft support 310 extends in the first direction of the foldable-screen mobile phone. The rotating shaft support 310 extends from a first end 313 (an end on the left side in FIG. 2) of the foldable-screen mobile phone to a second end 314 (an end on the right side in FIG. 2) of the foldable-screen mobile phone in the first direction. The first end 313 is a leftmost end of the foldable-screen mobile phone, and the second end 314 is a rightmost end of the foldable-screen mobile phone.

The rotating shaft support 310 may be divided into a plurality of segments in the first direction. As shown in FIG. 2, a first segment 311 is disposed in a middle portion of the rotating shaft support 310. The first segment 311 may be configured to lay a flexible printed circuit (Flexible Printed Circuit, FPC) (not shown in the figure), and the flexible printed circuit is used as a conductor to connect two circuit boards of the foldable-screen mobile phone. It should be noted that for a specific structure of the flexible printed circuit and a connection manner between the flexible printed circuit and the two circuit boards, reference may be made to the conventional technology, and details are not described in this embodiment of this application.

In this embodiment of this application, the rotating shaft support is integrally formed, and the integrally formed structure can reduce a tolerance and a force during a part connection, and improve overall strength of the rotating shaft support.

As shown in FIG. 2 or FIG. 3, the six groups of main swing arms 320 are disposed on the rotating shaft support 310 in the first direction in a relatively uniform manner. Disposing a relatively large quantity of main swing arms 320 can effectively improve strength of the rotating shaft assembly 300. In some embodiments of this application, a quantity of groups of main swing arms 320 may be greater than six, for example, seven or eight; or a quantity of groups of main swing arms 320 may be less than six, for example, four or five. It should be noted that spacings between the groups of main swing arms 320 may not be equal, in other words, "uniform" described in this embodiment of this application is "relatively uniform", and the spacings may be unequal. For example, because a distance between main swing arms 320 on two ends of the first segment 311 of the rotating shaft support 310 is greater than a distance between other main swing arms 320 on the same side of a second segment 312, "uniform" in this case is not "absolutely uniform".

As shown in FIG. 2 or FIG. 3, in the unfolded state of the mobile phone, each group of main swing arms 320 may include two main swing arms 320, and the two main swing arms 320 are symmetrically disposed on two sides of the rotating shaft support 310 in the second direction (referring to the x-axis direction shown in (a) in FIG. 1 when the mobile phone is in the unfolded state). Each main swing arm 320 is rotatably connected to the rotating shaft support 310.

In this embodiment of this application, the second direction may be understood as a direction perpendicular to an axis of the rotating shaft assembly, in other words, perpendicular to the first direction. "Perpendicular" herein is not "absolutely perpendicular", and may be "approximately perpendicular" caused by a machining error and an assembly error.

In the six groups of main swing arms 320, four groups of main swing arms 320 are respectively disposed on the first end 313 of the rotating shaft support 310, the second end 314 of the rotating shaft support 310, and two sides of the first segment 311 in the first direction. To be specific, one group of main swing arms 320 is disposed on each of two ends of the rotating shaft support 310 that are closest to edges. The other two groups of main swing arms 320 may be disposed on the second segment from a perspective of overall layout uniformity, for example, in FIG. 2, are disposed on the second segment 312 on the left side of the first segment 311. When the foldable-screen mobile phone is in the folded state (referring to the folded state shown in (c) in FIG. 1), the first end 313 and the second end 314 of the rotating shaft support 310 are exactly two corners of the foldable-screen mobile phone. When the foldable-screen mobile phone drops, the corners of the foldable-screen mobile phone first come into contact with the ground, and are the most prone to damage. Therefore, disposing the main swing arms 320 near the first end 313 and the second end 314 can further provide support for the rotating shaft support 310, thereby improving overall strength of the rotating shaft support 310. In addition, as shown in FIG. 2, one group of main swing arms 320 is disposed on each of two sides of a segment (corresponding to the first segment 311) that is of the rotating shaft support 310 and that is configured to lay the flexible printed circuit, so that strength of the rotating shaft support 310 on two sides of the flexible printed circuit can be improved, thereby better protecting the flexible printed circuit.

In some embodiments, the spacing between the groups of main swing arms and a quantity of main swing arms may be adjusted based on a length of the rotating shaft support 310.

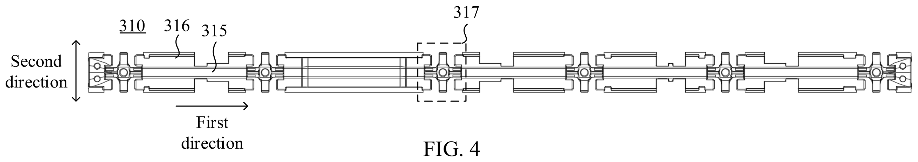

Referring to FIG. 4, FIG. 4 is a top view of a rotating shaft support according to an embodiment of this application. As shown in FIG. 4, the rotating shaft support 310 includes a support body 315 and a supporting portion 316. The support body 315 is an elongated strip extending in the first direction, and a length of the support body 315 in the first direction is a length of the rotating shaft support 310 in the first direction. The supporting portion 316 is symmetrically disposed on the support body 315 by using the support body 315 as an axis.

In an embodiment of this application, a sliding groove may be disposed at a connection position, on the supporting portion 316, corresponding to the main swing arm, an arc-shaped sliding surface is disposed on the sliding groove, the arc-shaped sliding surface fits with an arc-shaped sliding surface disposed on the main swing arm 320, and the two arc-shaped sliding surfaces abut against each other. In this connection manner, it is convenient for the main swing arm to slide along arc-shaped surface curvature of the arc-shaped sliding surface, which helps control a sliding angle of the main swing arm.

In an implementation of this application, as shown in FIG. 4, to connect to another component, for example, the main swing arm and a damping assembly, the supporting portion 316 is configured as a plurality of segments, and intervals exist between the segments. For example, a connection to the main swing arm (corresponding to the main swing arm 320 in FIG. 2) is used as an example. These intervals are used to accommodate a portion of the main swing arm, to implement a rotatable connection between the main swing arm and the rotating shaft support 310. The following describes a specific structure of the supporting portion with reference to the accompanying drawings.

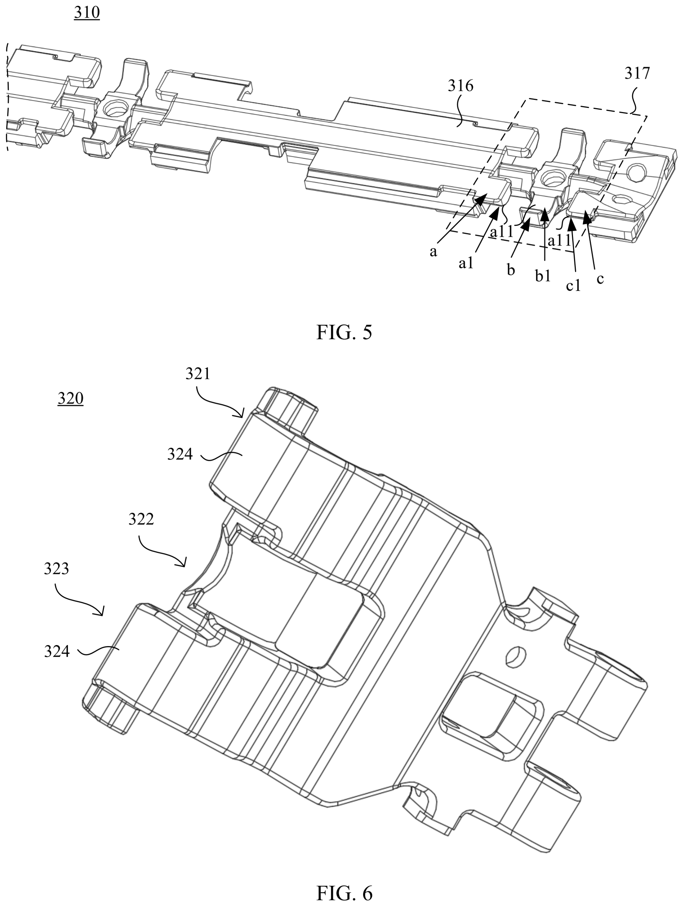

Referring to FIG. 5 and FIG. 6, FIG. 5 is a schematic diagram of a partial structure of a rotating shaft support according to an embodiment of this application, and FIG. 6 is a schematic diagram of a three-dimensional structure of a main swing arm according to an embodiment of this application.

As shown in FIG. 5, an installation position 317 on the rotating shaft support 310 for connecting to or installing the main swing arm 320 is divided into a left segment a (corresponding to the left side in FIG. 5), an intermediate segment b, and a right segment c (corresponding to the right side in FIG. 5). The sliding groove is disposed on each of the left segment a, the intermediate segment b, and the right segment c, a first sliding groove a1 is correspondingly formed on a sliding groove on the left segment a, a sliding groove on the right segment c is a second sliding groove c1, a sliding groove on the intermediate segment b is a third sliding groove b1, and the first sliding groove a1, the second sliding groove c1, and the third sliding groove b1 constitute distributed sliding grooves.

As shown in FIG. 6, a sliding groove is also formed on an end that is of the main swing arm 320 and that is connected to the rotating shaft support (corresponding to the rotating shaft support 310 in FIG. 5), and the sliding groove is also divided into three segments. The arc-shaped sliding surface corresponding to the sliding groove on the main swing arm 320 fits with the arc-shaped sliding surface corresponding to the sliding groove on the supporting portion 316, so that the main swing arm 320 is slidably and rotatably connected to the rotating shaft support. Compared with a conventional connection manner in which a plurality of components rotatably fit with a swing arm, this integrally formed distributed sliding groove design can reduce a manufacturing tolerance size of a plurality of parts, and improve installation precision of the main swing arm 320 and the rotating shaft support. In addition, because a single part is installed, installation time can be reduced, and production efficiency can be improved.

The foregoing embodiments described in FIG. 5 and FIG. 6 are described by using an example in which the left segment a and the right segment c are separately disposed on a lower surface (a surface corresponding to lower portions of the left segment a and the right segment c in FIG. 5) and the sliding groove on the intermediate segment b is disposed on an upper surface (a surface corresponding to an upper portion of the intermediate segment b in FIG. 5). In some embodiments, alternatively, the sliding grooves on the left segment a and the right segment c may be disposed on an upper surface, and the sliding groove on the intermediate segment b may be disposed on a lower surface. Alternatively, the sliding groove on the left segment a is located on an upper surface, and the sliding grooves on the intermediate segment b and the right segment c are disposed on a lower surface. Alternatively, the sliding grooves on the left segment a and the intermediate segment b are disposed on a lower surface, and the sliding groove on the right segment c is disposed on an upper surface. In this embodiment of this application, a manner in which the sliding grooves are disposed on different segments is not uniquely limited.

In an embodiment of this application, as shown in FIG. 5, a first arc-shaped sliding surface a11 corresponding to the first sliding groove a1 is disposed on a lower surface of the left segment a of the supporting portion 316, a first arc-shaped sliding surface a11 corresponding to the third sliding groove b1 is disposed on a lower surface of the right segment c of the supporting portion 316, and a first arc-shaped sliding surface a11 corresponding to the second sliding groove c1 is disposed on an upper surface of the intermediate segment b of the supporting portion 316. Axes of the sliding groove on the left segment a, the sliding groove on the intermediate segment b, and the sliding groove on the right segment c, or arc-shaped sliding surfaces corresponding to the sliding grooves on the segments coincide. Correspondingly, as shown in FIG. 5 and FIG. 6, sliding grooves of the main swing arm 320 include a fourth sliding groove 321, a fifth sliding groove 322, and a sixth sliding groove 323 between the fourth sliding groove 321 and the fifth sliding groove 322. The fourth sliding groove 321 corresponds to the first sliding groove a1, the fifth sliding groove 322 corresponds to the second sliding groove c1, and the sixth sliding groove 323 corresponds to the third sliding groove b1, in other words, a second arc-shaped sliding surface 324 corresponding to the fourth sliding groove 321 fits with the first arc-shaped sliding surface a11 corresponding to the first sliding groove a1, a second arc-shaped sliding surface 324 corresponding to the fifth sliding groove 322 fits with the first arc-shaped sliding surface a11 corresponding to the second sliding groove c1, and a second arc-shaped sliding surface 324 corresponding to the sixth sliding groove 323 fits with the first arc-shaped sliding surface a11 corresponding to the third sliding groove b1. In this integrated distributed sliding groove connection structure, a manufacturing tolerance of a part can be reduced, and connection stability between the rotating shaft support 310 and the main swing arm 320 can be strengthened by using an installation manner in which a fit alternates between an upper surface and a lower surface of the sliding groove.

Referring back to FIG. 2, the rotating shaft assembly 300 further includes four groups of damping assemblies 330, the four groups of damping assemblies 330 are disposed on the second segment 312 of the rotating shaft support 310, and the second segment 312 is a segment of the rotating shaft support 310 other than the first segment 311. The damping assembly 330 is configured to assist the main swing arm 320 in driving the first housing and the second housing (corresponding to the first housing 100 and the second housing 200 in FIG. 1) to rotate relative to each other, so that synchronous rotation between the first housing and the second housing can be implemented, and the damping assembly can provide a rotation resistance force for the main swing arm, thereby improving a hand feel for a constant angle change in a folding and unfolding process. In some embodiments of this application, a quantity of groups of damping assemblies 330 may be greater than four, for example, may be five, six, or more or fewer. The following describes a specific structure and working principle of the damping assembly 330 with reference to the accompanying drawings.

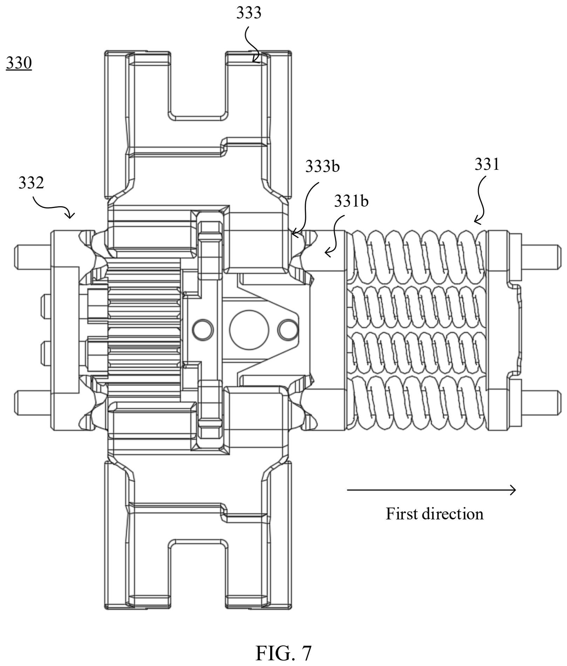

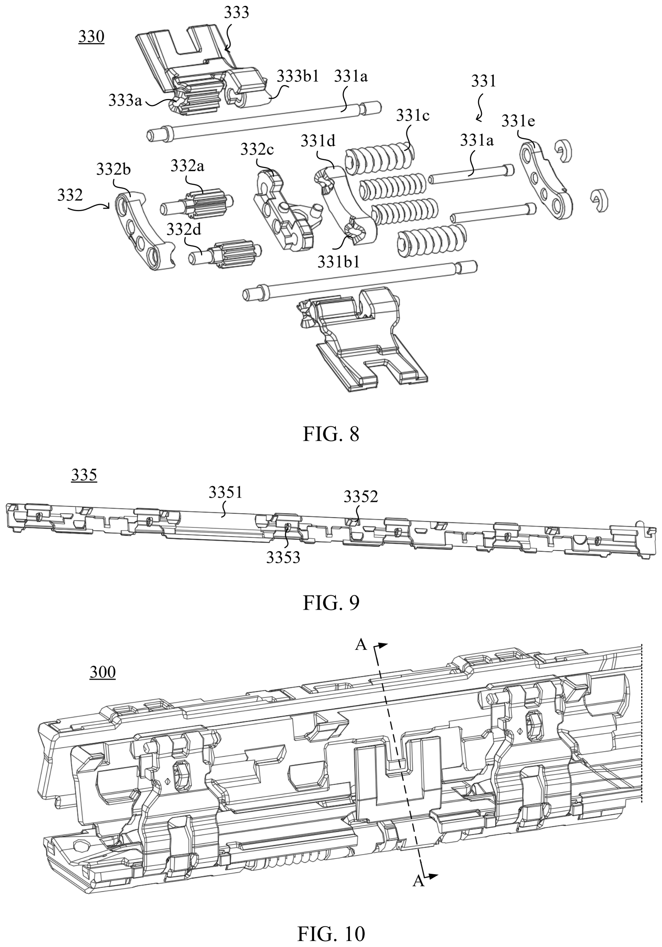

Referring to FIG. 7 and FIG. 8, FIG. 7 is a schematic diagram of a structure of a damping assembly according to an embodiment of this application, and FIG. 8 is an exploded view of a damping assembly according to an embodiment of this application.

As shown in FIG. 7 and FIG. 8, the damping assembly 330 may include a spring mechanism 331, a gear mechanism 332, and two auxiliary swing arms 333. The spring mechanism 331 is installed on the rotating shaft support (corresponding to the rotating shaft support 310 in FIG. 4), and a first rotating shaft 331a of the spring mechanism 331 is disposed in the first direction. The gear mechanism 332 is installed on the rotating shaft support (corresponding to the rotating shaft support 310 in FIG. 2), and a second rotating shaft 332d of the gear mechanism 332 is disposed in the first direction. The two auxiliary swing arms 333 are symmetrically disposed by using the rotating shaft support as an axis, and are rotatably connected to the rotating shaft support.

In this embodiment of this application, the main swing arms and the damping assemblies 330 are alternately disposed on the rotating shaft support 310, in other words, the main swing arms and the auxiliary swing arms 333 are alternately disposed on the rotating shaft support 310. In this way, during switching between the unfolded state and the folded state, a force on the main swing arm on the rotating shaft assembly is more uniform, and a damping force exerted in the first direction is more uniform.

A principle of driving the auxiliary swing arms 333 on the two sides of the rotating shaft support to rotate synchronously by the damping assembly 330 is first described. As shown in FIG. 7 and FIG. 8, a first gear 333a is disposed on a first side edge of the auxiliary swing arm 333, the gear mechanism 332 includes a second gear 332a, and the first gear 333a meshes with the second gear 332a. A convex-concave wheel 333b is formed on another side edge (a connection shaft) of the auxiliary swing arm 333, and a concave-convex wheel 331b is formed on an end that is of the spring mechanism 331 and that abuts against the auxiliary swing arm 333. The auxiliary swing arm 333 abuts against the spring mechanism 331 by using structures of the convex-concave wheel 333b and the concave-convex wheel 331b. As shown in FIG. 7 and FIG. 8, the convex-concave wheel 333b and the concave-convex wheel 331b each include a serrated recessed portion and protruding portion, to form an uneven serrated structure. The two wheels are connected to each other through meshing. When the auxiliary swing arm 333 rotates, the concave-convex wheel 331b and the convex-concave wheel 333b may rotate relative to each other around a same axis, so that relative rotation between the concave-convex wheel 331b and the convex-concave wheel 333b can further drive the first housing and the second housing (corresponding to the first housing 100 and the second housing 200 in FIG. 1) of the foldable-screen mobile phone to rotate relative to each other. Therefore, simultaneous rotation on two sides of the foldable-screen mobile phone in the unfolded state and the folded state can be assisted, so that a hand feel of automatic opening/closing is improved.

A process in which the damping assembly 330 provides the damping force for the main swing arm (for example, the main swing arm 320 in FIG. 3) is described next. As shown in FIG. 7 and FIG. 8, each of end surfaces of the concave-convex wheel 331b and the convex-concave wheel 333b that are in contact with each other is set to an uneven structure, resembling an irregular gear shape. When the convex-concave wheel 333b and the concave-convex wheel 331b fully mesh with each other, a recessed portion of the convex-concave wheel 333b corresponds to a protruding portion of the concave-convex wheel 331b, and a protruding portion of the convex-concave wheel 333b corresponds to a recessed portion of the concave-convex wheel 331b. The following describes an example in which a plurality of protruding portions 333b1 protruding outward are disposed on the convex-concave wheel 333b, and a plurality of recessed portions 331b1 recessed inward are disposed on the concave-convex wheel 331b. As shown in FIG. 7, when the auxiliary swing arm 333 rotates, the protruding portion 333b1 of the convex-concave wheel 333b slides through rotation along a sidewall of the recessed portion 331b1 of the concave-convex wheel 331b. When the protruding portion 333b1 of the cam 333b moves from a bottom portion of the recessed portion 331b1 of the cam follower 331b toward an opening direction of the recessed portion 331b1, two wheel bodies squeeze each other, which is equivalent to applying axial pressure to the spring mechanism 331 (correspondingly, applying an axial force in the first direction in FIG. 7). Correspondingly, the spring mechanism 331 provides reverse axial pressure to the auxiliary swing arm 333, and a friction force between the spring mechanism 331 and the auxiliary swing arm 333 increases. In this case, the spring mechanism 331 is compressed, so that rotation of the auxiliary swing arm 333 is subject to a resistive force. This resistive force is transferred to the main swing arm along with a component such as a connecting member, which equivalently means that the spring mechanism 331 also applies a resistive force (which may also mean that the damping force provided to the main swing arm by the damping assembly 330 formed by the spring mechanism 331 and the auxiliary swing arm 333) to rotation of the main swing arm, so that the damping assembly 330 provides a damping function for rotation of the main swing arm. On the contrary, when the protruding portion 333b1 of the cam 333b rotates from the opening direction of the cam follower 331b toward the bottom portion of the recessed portion 331b1, the axial pressure gradually decreases, and rotation of the auxiliary swing arm 333 becomes smoother, so that the main swing arm rotates more smoothly. Therefore, a friction force on surfaces of the convex-concave wheel 333b and the concave-convex wheel 331b can be adjusted through relative rotation between the convex-concave wheel 333b and the concave-convex wheel 331b. In other words, a magnitude of the damping force can be adjusted through rotation of the two wheels, so that different rotational hand feel experience brought by the housing to the user during rotation is adjusted, thereby improving user experience.

In an implementation of this application, the first rotating shaft 331a of the gear mechanism 332 and the second rotating shaft 332d of the spring mechanism 331 are rotating shafts having different axes. As shown in FIG. 8, the spring mechanism 331 may include four springs 331c, and a first fastener 331d and a second fastener 331e configured to fasten the springs 331c. Each spring 331c corresponds to one first rotating shaft 331a, and is limited between a first fastening base 331d and a second fastening base 331e. The gear mechanism 332 may include two second gears 332a, and a third fastening base 332b and a fourth fastening base 332c that are configured to fasten the second gear 332a. Each second gear 332a corresponds to one second rotating shaft 332d, and is rotatably disposed between the third fastening base 332b and the fourth fastening base 332c by using the second rotating shaft 332d. In this embodiment of this application, the first rotating shaft 331a and the second rotating shaft 332d are separated, and are not coaxially disposed. In other words, the spring mechanism 331 and the gear mechanism 332 are two completely independent components. In existing coaxial arrangement, axes of a gear and a spring mechanism are the same. By comparison, the gear mechanism 332 and the spring mechanism 331 in this embodiment of this application implement decoupling, and the gear mechanism 332 and the spring mechanism 331 are not dependent on each other. Two ends of the gear in the gear mechanism 332 can be independently fastened, and are no longer interfered with by a rotation force of the spring mechanism 331, so that synchronization precision of the two gears can be ensured. In addition, for the spring mechanism 331, the spring mechanism 331 is no longer limited by a quantity of gears, and therefore, a larger quantity of springs 331c and springs 331c of different sizes can be disposed, which facilitates output of a larger force of the springs 331c and improves flexibility of the damping force. In addition, the gear and the spring are not subject to a coaxial limitation, making machining easier.

In this embodiment of this application, to ensure coaxial arrangement between the auxiliary swing arm 333 and the spring mechanism 331, for two first rotating shafts 331a close to two auxiliary swing arms 333 (two auxiliary swing arms 333 above and below the first rotating shaft 331a in FIG. 8), one end thereof is connected to the second fastening base 331e, and the other end thereof may pass through the spring 331c, the first fastening base 331d, a shaft hole of the auxiliary swing arm 333, and the fourth fastening base 332c, and is finally fastened to the third fastening base 332b. Therefore, rigidity of an overall connection of the damping assembly 330 is improved, and synchronization of axial forces on the left and right sides is improved when the auxiliary swing arm 333 rotates coaxially with the spring mechanism 331.

It should be noted that the foregoing embodiment is described by using an example in which there are four springs 331c and two gears. In some other implementations, there may be more or fewer springs 331c, for example, three or five springs, and there may be more or fewer gears, for example, one or three gears. This is not uniquely limited in this embodiment of this application.

As shown again in FIG. 2, the rotating shaft assembly 300 further includes a connecting member 334, where the connecting member 334 is rotatably connected to at least two main swing arms and at least one auxiliary swing arm 333. In an embodiment of this application, the connecting member 334 is further slidably connected to the main swing arm and the auxiliary swing arm 333. Synchronization of rotation of the main swing arm and the auxiliary swing arm 333 can be ensured through a connection using the connecting member 334. In addition, one connecting member 334 is connected to at least two main swing arms 320. For two main swing arms 320, as a bridge for connecting the two main swing arms, the connecting member 334 can improve a coaxial rotation capability between the main swing arms 320. In addition, a connection of the two main swing arms 320 can improve a drop resistance capability of the connecting member 334 compared with a connection form of a single main swing arm.

As shown in FIG. 2, two main swing arms 320 are respectively connected to two end portions of the connecting member 334, so that a capability of protecting the end portions of the connecting member 334 is greatly improved, and drop resistance performance of the connecting member 334 is further improved. Together with the foregoing layout structure in which the main swing arm 320 is located on the entire rotating shaft support, this structure can greatly improve rigidity of overall strength of the rotating shaft assembly, so that an overall drop resistance capability of the rotating shaft assembly can be improved.

It should be noted that for a connection structure between the connecting member 334 and the main swing arm 320 and between the connecting member 334 and the auxiliary swing arm 333, reference may be made to descriptions in the conventional technology, and details are not described in this embodiment of this application.

Referring to FIG. 9, FIG. 9 is a schematic diagram of a structure of a door panel according to an embodiment of this application. As shown in FIG. 9, the rotating shaft assembly further includes a door panel 335, and the door panel 335 is laid on the main swing arm (corresponding to the main swing arm 320 in FIG. 2), the auxiliary swing arm (corresponding to the auxiliary swing arm 333 in FIG. 2), and the connecting member (corresponding to the connecting member 334 in FIG. 2), and is separately connected to the main swing arm, the auxiliary swing arm, and the connecting member. Overall linkage of the rotating shaft assembly can be improved, and the display screen can be supported, so that overall strength of a product is improved.

As shown in FIG. 9, the door panel 335 includes a door panel body 3351 and a sliding groove member. The door panel body 3351 is rotatably connected to the connecting member (corresponding to the connecting member 334 in FIG. 2). The sliding groove member is disposed on the door panel 335, and an arc-shaped surface is formed on a surface of the sliding groove member, to assist the door panel body 3351 in rotating relative to the connecting member along a trajectory of the arc-shaped surface.

In this embodiment of this application, as shown in FIG. 9, the sliding groove member may include a first auxiliary sliding groove member 3352 and a second sliding groove member 3353. The first sliding groove member 3352 is configured to implement a slidable connection between the door panel 335 and the connecting member. The second sliding groove member 3353 is configured to implement a slidable connection between the door panel 335 and the main swing arm. It should be noted that for a principle of a connection manner between the door panel 335 and the connecting member, the main swing arm, and the auxiliary swing arm, reference may be made to descriptions in the conventional technology, and details are not described herein.

In some embodiments, the door panel body 3351 is integrally formed with the first sliding groove member 3352 and the second sliding groove member 3353. For example, the door panel body 3351 and the second sliding groove member 3353 may be formed through primary injection molding by using a high-strength material, and then the first sliding groove member 3352, the second sliding groove member 3353, and the door panel body 3351 are integrally formed through secondary insert (insert) molding, to ensure overall strength and kinematic pair strength of the door panel 335, and meet machining feasibility and machining accuracy of the product, which helps slim the entire product, and can ensure overall strength of the product.

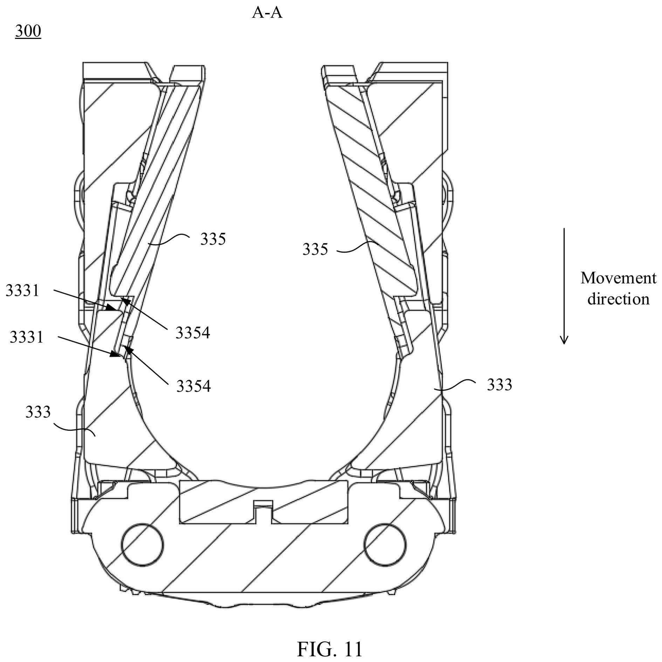

Referring to FIG. 10 and FIG. 11, FIG. 10 is a schematic diagram of a partial structure of a rotating shaft assembly in a folded state according to an embodiment of this application, and FIG. 11 is a diagram of a cross-sectional structure in an A-A direction in FIG. 10.

As shown in FIG. 10 and FIG. 11, a first lap surface 3354 is disposed on a side that is of the door panel 335 and that is opposite to the auxiliary swing arm 333. A second lap surface 3331 is disposed on a side that is of the auxiliary swing arm 333 and that is opposite to the door panel 335. When the auxiliary swing arm 333 drives the door panel 335 to be in the folded state shown in FIG. 10 and FIG. 11, if the door panel 335 moves toward the auxiliary swing arm 333 (moving from top to bottom, as shown in FIG. 11), the first lap surface 3354 abuts against the second lap surface 3331, so that the door panel 335 can be prevented from continuing to slide downward. For example, after the foldable-screen mobile phone drops, a corner of the rotating shaft assembly comes into contact with the ground and is subject to a force, a body of the foldable-screen mobile phone still moves downward due to inertia, and a downward moving distance of the door panel 335 can be prevented through fitting between the first lap surface 3354 and the second lap surface 3331. Therefore, excessive movement of the door panel 335 can be avoided, and damage to a structure of a component, for example, a structure of the display screen, the main swing arm, and the auxiliary swing arm 333, connected to the door panel 335 can be avoided. When the door panel 335 returns to a position before the door panel 335 moves, a gap is formed between the first lap surface 3354 and the second lap surface 3331, to ensure normal sliding between the door panel 335 and the auxiliary swing arm 333 in normal use. Therefore, a drop resistance capability at the auxiliary swing arm 333 during an accidental drop is improved without affecting normal use.

In some embodiments of this application, a plurality of first lap surfaces 3354 may be disposed to form a stepped shape, a plurality of second lap surfaces 3331 may also be disposed to form a stepped shape, and the plurality of first lap surfaces 3354 are in a one-to-one correspondence with the plurality of second lap surfaces 3331, so that the drop resistance capability at the auxiliary swing arm 333 can be further improved.

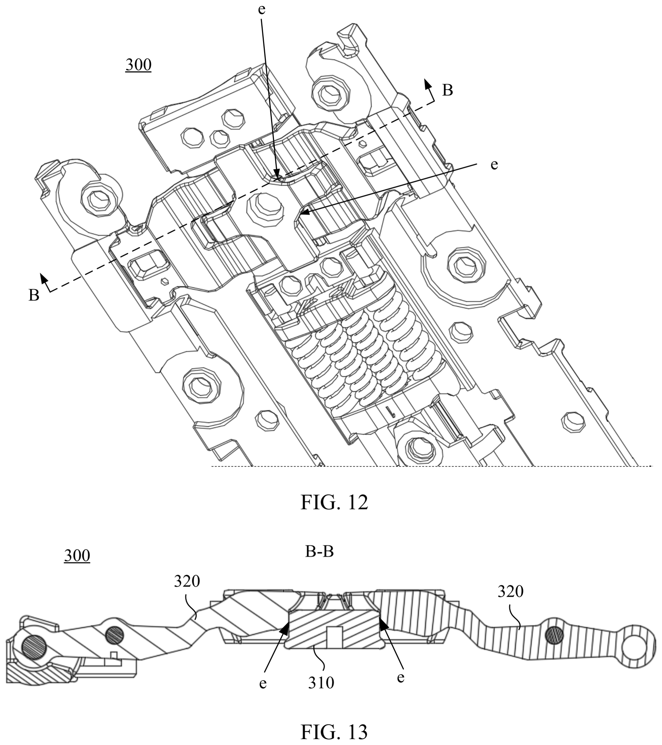

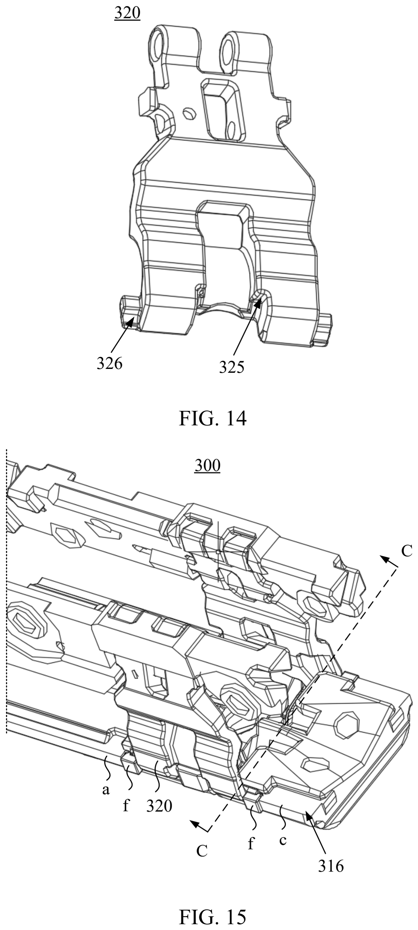

Referring to FIG. 12, FIG. 13, and FIG. 14, FIG. 12 is a schematic diagram of a partial structure of a rotating shaft assembly in an unfolded state according to an embodiment of this application, FIG. 13 is a diagram of a cross-sectional structure in a B-B direction in FIG. 12, and FIG. 14 is a schematic diagram of a structure of a main swing arm from another angle according to an embodiment of this application.

As shown in FIG. 12 and FIG. 13, an unfolding stopping block e is disposed on each of two sides of an end that is of the intermediate segment (corresponding to the intermediate segment b in FIG. 5) of the supporting portion of the rotating shaft support 310 and that is close to the support body. As shown in FIG. 13 and FIG. 14, a first abutment surface 325 is disposed on an end that is of the main swing arm 320 and that faces the unfolding stopping block e. When the main swing arm 320 is in the unfolded state, an abutment surface of the unfolding stopping block e abuts against the first abutment surface 325 of the main swing arm 320, so that an unfolding angle of the main swing arm 320 can be limited, and the unfolding angle is prevented from being excessively large to affect flatness of two display screens of the foldable-screen mobile phone after the two display screens are unfolded.

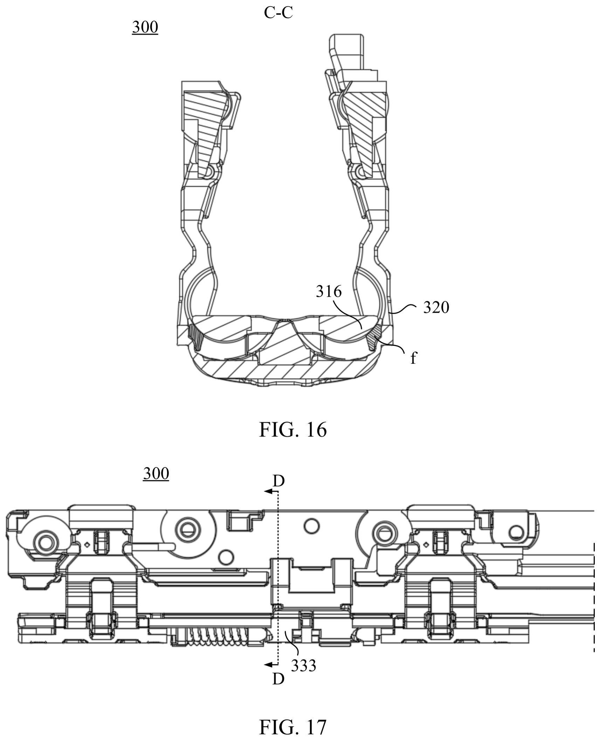

With reference to FIG. 14, and referring to FIG. 15 and FIG. 16, FIG. 15 is a schematic diagram of a structure of a rotating shaft assembly in a folded state according to an embodiment of this application, and FIG. 16 is a diagram of a cross-sectional structure in a C-C direction in FIG. 15.

As shown in FIG. 14, FIG. 15, and FIG. 16, a folding stopping block f is disposed on each of a side of the left segment a and a side of the right segment c of the supporting portion 316 of the rotating shaft support that are opposite to each other As shown in FIG. 14 and FIG. 15, a second abutment surface 326 is disposed on each of ends of the main swing arm 320 that are connected to the left segment a and the right segment c. As shown in FIG. 16, the second abutment surface 326 abuts against an end surface of the folding stopping block f when the main swing arm 320 is in the folded state, to limit a folding angle of the main swing arm 320, so that the folding angle is prevented from being excessively large to damage the display screen, and the like.

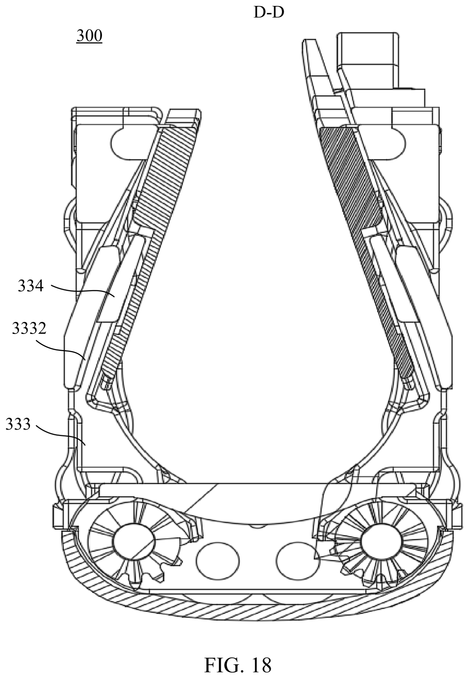

Referring to FIG. 17 and FIG. 18, FIG. 17 is a schematic diagram of a partial structure of a rotating shaft assembly in a folded state according to an embodiment of this application, and FIG. 18 is a diagram of a cross-sectional structure in a D-D direction in FIG. 17.

As shown in FIG. 18, an arc-shaped sliding groove 3332 is disposed at a position that is of the auxiliary swing arm 333 and that overlaps the connecting member 334. An end portion of the connecting member 334 abuts against a sidewall of the arc-shaped sliding groove 3332 when the rotating shaft assembly 300 is in the folded state, in other words, when the auxiliary swing arm 333 is in the folded state. In this way, when the auxiliary swing arm 333 drives the connecting member 334 to rotate, the end portion of the connecting member 334 slides along an arc-shaped surface of the arc-shaped sliding groove 3332. Compared with a conventional linear sliding surface, this structure can implement both sliding of the connecting member 334 and the auxiliary swing arm 333 and relative rotation between the connecting member 334 and the auxiliary swing arm 333. In this structure, when the connecting member 334 slides relative to the auxiliary swing arm 333, an inclination angle of the auxiliary swing arm 333 can be limited through abutment of the connecting member 334, so that a rotation angle of the auxiliary swing arm 333 can be limited, for example, limited to be less than 90°. A lower portion of the arc-shaped sliding groove 3332 (a bottom end of the arc-shaped sliding groove 3332 in FIG. 18) converges relative to the inside (a side facing the auxiliary swing arm 333 in FIG. 18). Therefore, compared with a conventional linear shape, this structure helps improve a thickness (a spacing in a horizontal direction in FIG. 18) of the auxiliary swing arm 333 and improve strength of the auxiliary swing arm 333, which helps expand available space for display screen installation and can improve a drop resistance capability of the entire shaft.

In conclusion, the rotating shaft assembly provided in this embodiment of this application tends to use an integrated design, and can maintain overall strength of the rotating shaft assembly while being slim and light as a whole, thereby improving overall performance of the product, and meeting requirements of a customer for a slim and light product with reliable strength.

It should be noted that in the described embodiments of this application, "perpendicular to each other" in this application is not "absolutely perpendicular", and "approximately perpendicular" caused by a machining error and an assembly error (for example, an included angle between two structural features is 89.9°) is also within the scope of "perpendicular to each other" in this application. "Parallel to each other" in this application is also not "absolutely parallel", and "approximately parallel" caused by a machining error and an assembly error (for example, an included angle between two structural features is 0.1°) is also within the scope of "parallel to each other" in this application. "Axially symmetrical" in this application is not "absolutely axially symmetrical", and "approximately axially symmetrical" caused by a machining error and an assembly error (for example, a part of a structure deviates from an axis of symmetry by a specific distance or angle) is also within the scope of "axially symmetrical" in this application. "Centrally symmetrical" in this application is not "absolutely centrally symmetrical", and "approximately centrally symmetrical" caused by a machining error and an assembly error (for example, a part of a structure deviates from an axis of symmetry by a specific distance or angle) is also within the scope of "centrally symmetrical" in this application. This is not specifically limit in this application.

It should be noted that in this specification, similar reference numerals and letters indicate similar items in the following accompanying drawings. Therefore, once an item is defined in one accompanying drawing, the item does not need to be further defined and explained in the subsequent accompanying drawings.

In the descriptions of this application, it should be noted that an orientation or positional relationship indicated by terms "center", "top", "bottom", "left", "right", "vertical", "horizontal", "inner", "outer", and the like is based on an orientation or positional relationship shown in the accompanying drawings, and is only for the convenience of describing this application and simplifying the description, rather than indicating or implying that the indicated apparatus or component must have a specific orientation or must be constructed and operated in a specific orientation. Therefore, the orientation or positional relationship should not be construed as a limitation on this application. In addition, the terms "first" and "second" are used for description only, and cannot be construed as indicating or implying relative importance.

In the descriptions of this application, it should be noted that unless otherwise expressly specified and defined, the terms "install", "connection", and "connected to" should be understood in a broad sense. For example, the connection can be a fixed connection, a detachable connection, or an integral connection; can be a mechanical connection or an electrical connection; or can be a direct connection, an indirect connection through an intermediate medium, or an internal connection between two elements. A person of ordinary skill in the art can understand specific meanings of the foregoing terms in this application based on specific cases.

Certainly, a person skilled in the art can make various modifications and variations to this application without departing from the spirit and scope of this application. In this way, this application is also intended to include these modifications and variations made to this application if they fall within the scope of the claims of this application and equivalent technologies thereof.

## Claims

1. A rotating shaft assembly, applied to a foldable electronic device, and comprising:
an integrally formed rotating shaft support, wherein the rotating shaft support extends from a first end of the foldable device to a second end of the foldable device in a first direction, and a middle portion of the rotating shaft support comprises a first segment used for a flexible printed circuit to pass through; and
at least four groups of main swing arms, wherein each group of main swing arms comprises two main swing arms symmetrically disposed on two sides of the rotating shaft support, each main swing arm is rotatably connected to the rotating shaft support, and four groups of main swing arms in the at least four groups of main swing arms are respectively disposed on a first end and a second end of the rotating shaft support and two sides of the first segment.

2. The rotating shaft assembly according to claim 1, wherein the rotating shaft support comprises:
a support body, wherein the support body is an elongated strip extending in the first direction, and a length of the support body in the first direction is a length of the rotating shaft support in the first direction; and
a supporting portion, wherein the supporting portion is symmetrically disposed on the support body by using the support body as an axis, a sliding groove is disposed at an installation position that is of the supporting portion and that corresponds to the main swing arm, and a first arc-shaped sliding surface of the sliding groove fits with a second arc-shaped sliding surface of the main swing arm, wherein
the installation position of the supporting portion is configured as three segments that are spaced apart, the three segments are a left segment, an intermediate segment, and a right segment, and the sliding groove is disposed on each of the left segment, the intermediate segment, and the right segment.

3. The rotating shaft assembly according to claim 2, wherein sliding grooves on the left segment and the right segment are disposed on a lower surface of the supporting portion, a sliding groove on the intermediate segment is disposed on an upper surface of the supporting portion, and the sliding grooves on the left segment, the intermediate segment, and the right segment are coaxial.

4. The rotating shaft assembly according to claim 2, wherein sliding grooves on the left segment and the right segment are disposed on an upper surface of the supporting portion, a sliding groove on the intermediate segment is disposed on a lower surface of the supporting portion, and the sliding grooves on the left segment, the intermediate segment, and the right segment are coaxial.

5. The rotating shaft assembly according to any one of claims 1-4, further comprising:
a plurality of damping assemblies, wherein the plurality of damping assemblies are disposed on a segment of the rotating shaft support other than the first segment, wherein
the damping assembly comprises:
a spring mechanism, wherein the spring mechanism is installed on the rotating shaft support, and a first rotating shaft of the spring mechanism is disposed in the first direction;
a gear mechanism, wherein the gear mechanism is installed on the rotating shaft support, a second rotating shaft of the gear mechanism is disposed in the first direction, and the first rotating shaft and the second rotating shaft are rotating shafts having different axes; and
two auxiliary swing arms, wherein the two auxiliary swing arms are symmetrically disposed by using the rotating shaft support as an axis, and are rotatably connected to the rotating shaft support, a first side edge of the auxiliary swing arm meshes with a gear of the gear mechanism, another side edge of the auxiliary swing arm abuts against the spring mechanism by using structures of a cam and a cam follower, and when rotating, the auxiliary swing arm pushes a compression force of a spring of the spring mechanism to increase or decrease.

6. The rotating shaft assembly according to claim 5, wherein
a convex-concave wheel is disposed on a side of the auxiliary swing arm;
a concave-convex wheel corresponding to the convex-concave wheel is disposed on a side of the spring mechanism, and the convex-concave wheel and the concave-convex wheel rotate around the first rotating shaft; and
when the convex-concave wheel and the concave-convex wheel rotate around the first rotating shaft to a meshed state, a protruding portion of the convex-concave wheel corresponds to a recessed portion of the concave-convex wheel, and a recessed portion of the convex-concave wheel corresponds to a protruding portion of the concave-convex wheel.

7. The rotating shaft assembly according to claim 6, wherein a first gear is disposed on the auxiliary swing arm, the gear mechanism comprises a second gear, the first gear meshes with the second gear, and the auxiliary swing arms on the two sides of the rotating shaft support are driven to rotate synchronously by using the first gear and the second gear.

8. The rotating shaft assembly according to claim 7, wherein at least two second gears exist, and the at least two second gears mesh with each other.

9. The rotating shaft assembly according to any one of claims 1-3, further comprising:
a connecting member, wherein the connecting member is rotatably connected to at least two main swing arms and at least one auxiliary swing arm.

10. The rotating shaft assembly according to claim 9, wherein two main swing arms rotatably connected to the connecting member are respectively located on two ends of the connecting member.

11. The rotating shaft assembly according to claim 9, further comprising:
a door panel, wherein the door panel is laid on the main swing arm, the auxiliary swing arm, and the connecting member, and is separately connected to the main swing arm, the auxiliary swing arm, and the connecting member, wherein
the door panel comprises:
a door panel body, wherein the door panel body is rotatably connected to the connecting member; and
a sliding groove member, wherein the sliding groove member is disposed on the door panel, an arc-shaped surface is formed on a surface of the sliding groove member, to assist the door panel body in rotating relative to the connecting member along a trajectory of the arc-shaped surface, and the door panel body and the sliding groove member are integrally formed.

12. The rotating shaft assembly according to claim 11, wherein
a first lap surface is disposed on a side that is of the door panel and that is opposite to the auxiliary swing arm;
a second lap surface is disposed on a side that is of the auxiliary swing arm and that is opposite to the door panel; and
when the auxiliary swing arm drives the door panel to be in a folded state, and the door panel moves toward the auxiliary swing arm, the first lap surface abuts against the second lap surface, and when the door panel returns to a position before the movement, a gap is formed between the first lap surface and the second lap surface.

13. The rotating shaft assembly according to claim 12, wherein a plurality of first lap surfaces are disposed, a plurality of second lap surfaces are disposed, and the plurality of first lap surfaces are in a one-to-one correspondence with the plurality of second lap surfaces.

14. The rotating shaft assembly according to claim 2, wherein an unfolding stopping block is disposed on each of two sides of an end that is of the intermediate segment and that is close to the support body, and the unfolding stopping block abuts against a first abutment surface of the main swing arm when the main swing arm is in an unfolded state, to limit an unfolding angle of the main swing arm.

15. The rotating shaft assembly according to claim 2, wherein a folding stopping block is disposed on each of a side of the left segment and a side of the right segment that are opposite to each other, and the folding stopping block abuts against a second abutment surface of the main swing arm when the main swing arm is in a folded state, to limit a folding angle of the main swing arm.

16. The rotating shaft assembly according to claim 11, wherein an arc-shaped sliding groove is disposed at a position that is of the auxiliary swing arm and that overlaps the connecting member, an end portion of the connecting member abuts against a sidewall of the arc-shaped sliding groove when the auxiliary swing arm is in a folded state, and the end portion of the connecting member slides along an arc-shaped surface of the arc-shaped sliding groove when the auxiliary swing arm drives the connecting member to rotate.

17. The rotating shaft assembly according to claim 1, wherein six groups of main swing arms are disposed.

18. The rotating shaft assembly according to claim 5, wherein four groups of damping assemblies are disposed.

19. A foldable electronic device, comprising a first housing, a second housing, and a rotating shaft assembly, wherein the first housing and the second housing are rotatably connected to each other by using the rotating shaft assembly, and the rotating shaft assembly is the rotating shaft assembly according to any one of claims 1-18.
